# EUROPEAN PATENT APPLICATION

(11) **EP 2 532 931 A1**
(43) Date of publication of application: **12.12.2012**
(21) Application number: 12004271.8
(22) Date of filing: 05.06.2012
(51) Int. Cl.: F16J 15/06, F16J 15/12, F01L 1/053

(54) **Gasket and seal structure**

(30) Priority: 10.06.2011 JP 2011129869
(71) Applicant: Uchiyama Manufacturing Corp., Okayama-shi Okayama 702-8004 (JP)
(72) Inventor: Yamamoto, Keita, Akaiwa-shi Okayama, 7012221 (JP)
(74) Representative: Müller - Hoffmann & Partner

(57) **Abstract**

A gasket and a gasket seal structure in which the gasket is adapted to be inserted into a cutout recess part formed on a wall part of a box-shaped member with an opening part on at least one surface, the cutout recess part communicating with the opening part. The gasket and the structure thereof are characterized by the followings; the cutout recess part has a chamfered surface at the corner part on the opening part side; the gasket comprises an exterior rubber part having a seal surface part elastically contacting the cutout recess part and a core body having higher rigidity than that of the exterior rubber part and covered with the exterior rubber part; and the seal surface part has at a region corresponding to the corner part on the opening part side of the cutout recess part a projecting part formed along the corner part on the opening part side and projecting toward the corner part on the opening part side of the cutout recess part.

## Description

### BACKGROUND OF THE INVENTION

### Field of the Invention

The present invention relates to a gasket adapted to be inserted for sealing into a cutout recess part of a cylinder head formed for attaching a cam shaft or into the cutout recess part formed on a wall part of a case containing an electric control unit and also relates to a seal structure.

### Background Art

An exclusive gasket for sealing a cutout recess part is used for the above-mentioned cutout recess part formed on a cylinder head of an internal combustion engine (for example, refer to Patent Literatures 1 to 4).
Recently there has been increasing demand for a hybrid automobile which combines an internal combustion engine with an electric motor for automobile and an electric control unit such as an inverter, a converter, an electric transformer or the like is used for such a hybrid automobile for controlling operations of the electric motor. The electric control unit is contained in a case and the case uses a plug member (hereinafter called as a gasket) which holds an electric wire and a pipe for supplying a cooling medium for restricting heat generation and is fitted into the cutout recess part formed on a case wall to seal the cutout recess part.

PTL 1: Japanese Examined Utility Model Publication JP-S51-31975-Y
PTL 2: Japanese Examined Utility Model Publication JP-H02-25967-Y
PTL 3: Japanese Unexamined Patent Publication JP-S61-167148-A
PTL 4: Japanese Unexamined Patent Publication JP-2009-264566-A

PTL 1 discloses a packing (gasket) made of only an elastic material such as rubber and a cutout recess part is formed around a corner part of a cutout recess part in order to avoid high stress when the packing is fitted into the cutout recess part. PTL 1 also discloses that such a cutout recess part provided on the surface around the corner part prevents the surface from hardening when the packing is fitted, thereby inhibiting forming of gap and eliminating need for a seal agent. However, it is anticipated that the packing is elastically deformed and seal performance of the cutout recess part deteriorates when the packing is applied with inner pressure or is exposed to high-pressure cleaning water because the packing is made of only an elastic material.

PTL 2 discloses that a cutout recess part of a cylinder head is circular and has a stepped part with different curvatures so as to fit a seal member (gasket) into the circular cutout recess part without causing misalignment and that the seal member is formed in accordance with the shape of the cutout recess part. However, PTL 2 does not consider seal performance of the corner part of the cutout recess part or a so-called three-surface abutting part (where three members such as a cylinder head, a cylinder head cover and a seal member abut mutually, the same hereinafter), so that an auxiliary seal agent such as a liquid gasket is necessary. Therefore, it is anticipated that assembly man-hour is required and the seal agent has to be removed in case of disassembly for maintenance.

PTL 3 discloses a cylinder head cover gasket wherein a core member is embedded in a plug part (gasket), a flange is formed on the core member, and the flange is designed to abut an end edge of a cutout recess part. In such a case, an auxiliary seal agent is required to be applied especially to a cutout corner part and there are troubles with operation ability in case of assembly and disassembly as mentioned above.

PTL 4 discloses that a core member has a flange part and a tongue piece part opposite to the flange part and a gasket has a plug part to be fitted into a cutout recess part so as to sandwich both circumferential sides of the cutout recess part with the flange part and the tongue piece part. In such a case, an auxiliary seal agent is required to be applied on a corner part of the cutout recess part in order to secure seal performance and the above-mentioned troubles still remain.

### SUMMARY OF THE INVENTION

The present invention has an object to provide a gasket fitted into a cutout recess part for sealing and capable of securing seal performance of a corner part on an opening part side of the cutout recess part without using an auxiliary seal agent and to provide a seal structure.

A gasket for sealing the cutout recess part of the present invention is characterized by being inserted into the cutout recess part formed on a wall part of a box-shaped member with the opening part on at least one surface in which the cutout recess part communicates with the opening part. The gasket comprises an exterior rubber part having a seal surface part elastically contacting the cutout recess part and a core body having higher rigidity than that of the exterior rubber part and covered with the exterior rubber part; the cutout recess part has a chamfered surface at the corner part on the opening part side; and the seal surface part has at a region corresponding to the corner part on the opening part side of the cutout recess part a projecting part formed along the corner part on the opening part side and projecting toward the corner part on the opening part side of the cutout recess part.

In the gasket of the present invention, the projecting part may further have a compression allowance portion projecting opposite to the seal surface part.
In the gasket of the present invention, the exterior rubber part may have a cover part extending from a side part of the seal surface part so as to cover a region of the wall part corresponding to the cutout recess part from the outside of the box-shaped member when the gasket is fitted into the cutout recess part of the box-shaped member; and the cover part may have an expanding part at the region corresponding to the corner part on the opening part side.
In the gasket of the present invention, the core body may have a tongue piece part formed to reach a position corresponding to the projecting part; and the exterior rubber part may have a projection part formed to cover the tongue piece part.
In the gasket of the present invention, the core body may be made of metal and the tongue piece part may be made by cutting and raising a part of the core body and bending the cut end side.

A seal structure including a gasket in which the gasket is adapted to be inserted into the cutout recess part formed on the wall part of the box-shaped member with the opening part on at least one surface in which the cutout recess part communicates with the opening part is **characterized in that** the cutout recess part has the chamfered surface at the corner part on the opening part side, the gasket comprises an exterior rubber part having the seal surface part elastically contacting the cutout recess part and the core body having higher rigidity than that of the exterior rubber part and covered with the exterior rubber part; and the seal surface part has at the region corresponding to the corner part on the opening part side of the cutout recess part the projecting part formed along the corner part on the opening part side and projecting toward the corner part on the opening part side of the cutout recess part.

The gasket of the present invention comprises the exterior rubber part having the seal surface part elastically contacting the cutout recess part and the core body which has higher rigidity than that of the exterior rubber part and is covered with the exterior rubber part. In such a construction the exterior rubber part becomes reinforced by the core body, thereby keeping a desired shape so long. Especially as for the exterior rubber part of the present gasket of such a construction, it is superior in shape retaining and uncomplicated in assembling, because it is not subject to deformation even when pressing force is applied at the time of fitting into the cutout recess part or even when external force is applied after fitting.
Further, the present gasket has the projecting part at the region corresponding to the corner part on the opening part side in which the projecting part is formed along and toward the corner part. Therefore, in such an embodiment of the present gasket that the gasket is fitted into the cutout recess part and then another sealing object member is integrated with the box-shaped member to be sealed through another annular gasket, the projecting part can deform along the shape of the chamfered corner part of the cutout recess part, thereby enabling seal performance at the corner part with no need for an auxiliary seal agent.

In case that the projecting part further has a compression allowance portion projecting opposite to the seal surface part, the allowance portion facilitates compression of the projecting part and elastic deformation of the tip part along the corner part on the opening part side. Therefore, even when the projecting part and the corner part have tolerance in dimension, the corner part can be preferably sealed.

In such a construction that the exterior rubber part further has the cover part extending from the side part of the seal surface part formed so as to cover from the outside of the box-shaped member the region of the wall part corresponding to the cutout recess part when the gasket is fitted into the cutout recess part, the side part of the seal surface part can be covered with the cover part, thereby further improving seal performance at the cutout recess part. In addition, in such a construction that the cover part further has an expanding part at the region corresponding to the corner part on the opening part side, the side part on the corner part can also be covered with the expanding part when another sealing object member is integrated with the box-shaped member to be sealed through another annular gasket. It results in improving seal performance between a region on the opening part side and another sealing object member. Moreover, in an embodiment of the present gasket having the expanding part mentioned above, reduction of distance between the outer circumferential edge of the expanding part and the corner part can be refrained. Thus no deterioration in seal performance around the corner part will occur.

The core body has the tongue piece part formed to reach the position corresponding to the projecting part and the exterior rubber part has the projection part formed to cover the tongue piece part, so that the cover part is prevented from being blown off even if external force by high-pressure cleaning water is applied, for example, thereby exerting further effective seal performance of the three-surface abutting part by the projecting part.

In case that the core body is made of metal and the tongue piece part is made by cutting and raising a part of the core body and bending the tip cut end side, the tongue piece part can be easily formed by sheet-metal processing of the core body.

In the seal structure of the present invention, in such an embodiment of the present gasket that the gasket is fitted into the cutout recess part and then another sealing object member is integrated with the box-shaped member to be sealed through another annular gasket, the projecting part can deform along the shape of the chamfered corner part on the opening part side of the cutout recess part, thereby enabling seal performance at the corner part with no need for an auxiliary seal agent.

### BRIEF DESCRIPTION OF THE SEVERAL VIEWS OF THE DRAWINGS

Fig.1 is a diagrammatic entire perspective view showing one embodiment of a gasket of the present invention together with a first member to be sealed.
Fig.2 is a partially broken front view and a partially enlarged view illustrating that the gasket is fitted into the first member to be sealed.
Fig.3 is a perspective view showing one embodiment of a core member for the gasket.
Fig.4 is an enlarged perspective view of "A" in Fig.1.
Fig.5 is a fragmentary view taken in the direction of line B-B of the gasket in Fig.2.
Fig.6 is a side view of the gasket seen from the arrow "C" in Fig.2.
Fig.7 is a view similar to the enlarged view in Fig.2 illustrating an embodiment in which the gasket is provided between two members to be sealed.
Fig.8 is a view similar to the enlarged view in Fig.2 illustrating another embodiment of the gasket of the present invention.
Fig.9 is a view similar to the partially broken front view in Fig.2 illustrating another embodiment of the gasket of the present invention.

### DETAILED DESCRIPTION OF THE INVENTION

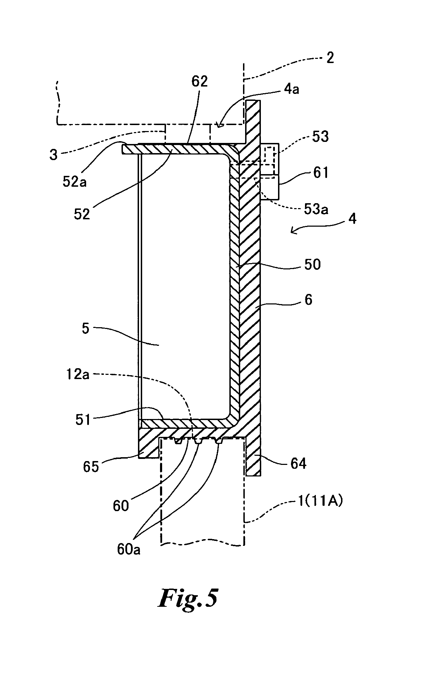

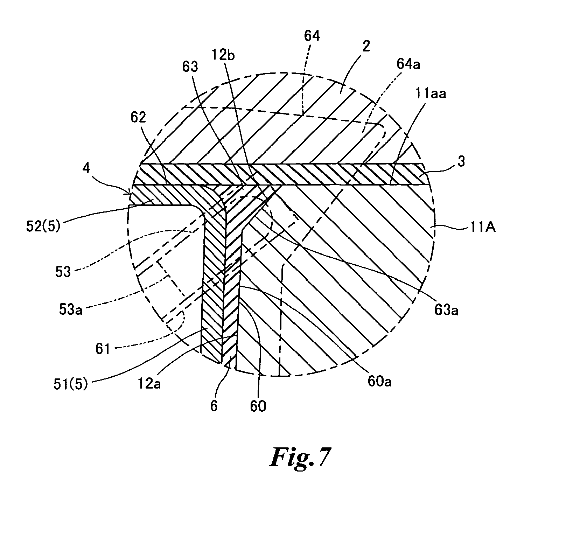

The embodiments of the present invention are explained referring to the attached drawings.

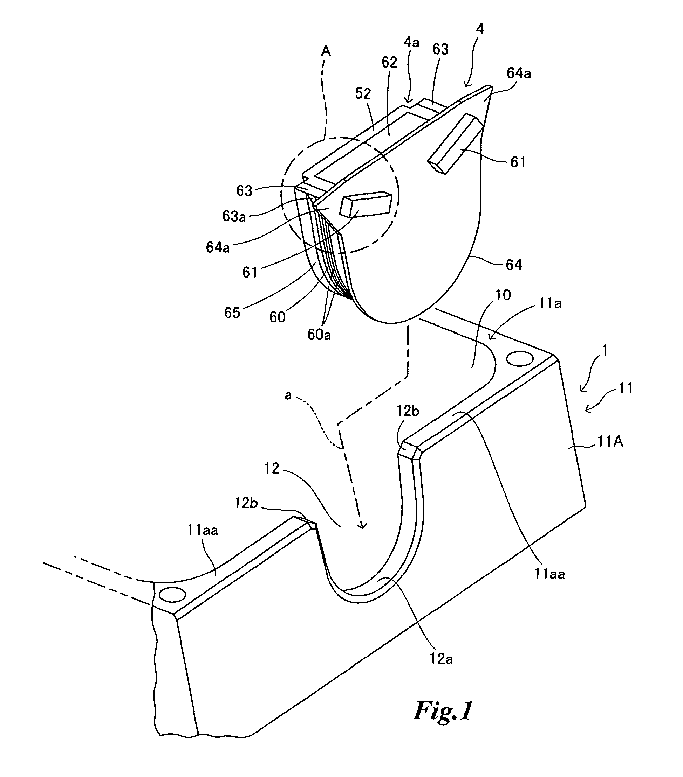

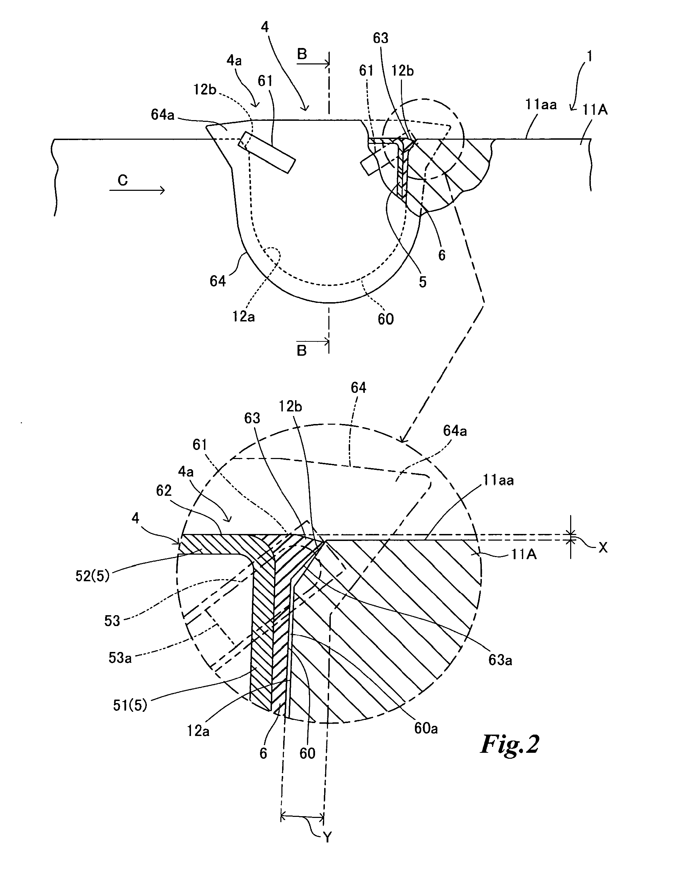

Fig. 1 is a diagrammatic entire perspective view showing one embodiment of the gasket of the present invention together with a first member to be sealed. Fig.2 is a partially broken front view and a partially enlarged view illustrating that the gasket is fitted into the first member to be sealed.
A first member 1 to be sealed is preferably a box-shaped member having an opening part on at least one surface and is shown as a box-shaped member having an opening part 10 on one surface (on an upper surface in Fig.1, Fig.2) of a substantially rectangular parallelepiped constituted with six surfaces in Fig.1 and Fig.2 wherein an upper end surface 11a of circumferential wall parts 11 surrounding the opening 10 is designed to be an objective part to be sealed. A second member 2 as another objective member to be sealed such as a cylinder head cover or a cover body is integrated with the upper end surface 11a via another annular gasket 3, as mentioned later (refer to Fig.5, Fig.7).
One wall part 11A of the circumferential wall parts 11 is formed with a cutout recess part 12 in the form of the letter U which is cut out in depth direction of the box-shaped first member 1 from an upper end surface 11aa of the wall part 11A (half ellipse or half oval). A cutout surface 12a of the cutout recess part 12 extends to the upper end surface 11a of the circumferential wall parts 11. A corner part on the opening part side 12b (a boundary between the cutout surface 12a and the upper end surface 11a of the circumferential wall parts 11, referred as the corner part 12b hereinafter) which is a corner part of the cutout recess part 12 is chamfered to be an inclining plane surface.

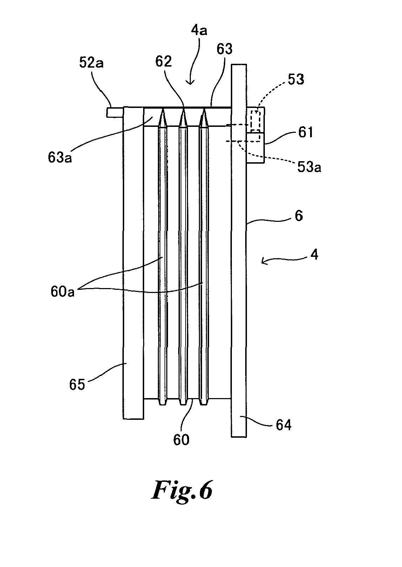

The gasket 4 comprises an exterior rubber part 6 having a seal surface part 60 elastically contacting the cutout recess part 12 and a core body 5 which has higher rigidity than the exterior rubber part 6 and is covered with the exterior rubber part 6.
The exterior rubber part 6 is integrally molded on a surface of the core body 5 and is made of a vulcanized molded body of rubber such as FKM, NBR, H-NBR, EPDM, CR, ACM, AEM, VMQ and FVMQ. Specifically, the core body 5 formed by sheet-metal working is placed in a mold having a cavity of predetermined shape, the above-mentioned unvulcanized rubber is injected in the mold and vulcanized, and a molded body integrated with the core body 5 as shown in the figure is obtained.
External surfaces of a longitudinal wall part 50 of the core body 5 and a first lateral wall part 51 are completely covered with the exterior rubber part 6 and the outer shape of the exterior rubber part 6 is formed so as to fit with the cutout recess part 12. Furthermore, tongue piece parts 53, 53 and raised piece parts 53a, 53a are embedded in and completely covered with the exterior rubber part 6. Parts of the exterior rubber part 6 covering the tongue piece parts 53, 53 are formed as inverted truncated chevron projection parts 61, 61 symmetrical from an anterior view. A surface of the exterior rubber part 6 covering an outer surface of the first lateral wall part 51 is constituted as the seal surface part 60 and a plurality of bead parts 60a are formed on the seal surface part 60 so as to rise in parallel each other along curve of the seal surface part 60 (refer to Fig.1, Fig.4, Fig.6) An outer surface of a second lateral wall part 52 is formed with a thin rubber-coated layer 62 constituting a part of the exterior rubber part 6 and a part of an outer surface of the second lateral wall part 52 around the rubber-coated layer 62 is exposed. A part 52a of an exposing region facing inside of the first member 1 is formed so as to project further to the inside compared with other part of the core member 5.
Three bead parts 60a are provided in the figure; however, the number is not limited and one, two, or more than 3 bead parts may be provided. It is effective to provide the bead parts 60a in view of seal performance, which is not considered essential.

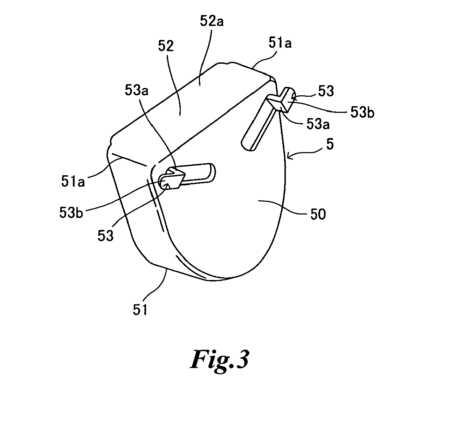

The core body 5 preferably has higher rigidity than the exterior rubber part 6 and may be produced by, for example, a drawing process of sheet metal. The core body 5 is formed corresponding to the shape of the cutout recess part 12; an iron sheet metal, a stainless steel metal, or the like is used when the core body 5 is made of sheet metal. The core body 5 has the longitudinal wall part 50 of which outer shape from an anterior view (seen from the direction perpendicular to the circumferential wall parts 11) is substantially similar to the shape of the cutout recess part 12 and the first and second lateral wall parts 51, 52 which extend around the longitudinal wall part 50 and face the inside of the first member 1; and the core body 5 is formed in the shape of lateral box (of which section is in the form of transverse letter U). The first lateral wall part 51 is bent in the form of the letter U along the shape of the cutout surface 12a of the cutout recess part 12 and the second lateral wall part 52 is formed flat so as to cover an upper end edge of the first lateral wall part 51 and to become parallel to the upper end surface 11a of the circumferential wall parts 11 when the gasket 4 is fitted into the cutout recess part 12. The longitudinal wall part 50 is formed with a pair of tongue piece parts 53, 53 by cutting and raising. Namely, the tongue piece parts 53, 53 are formed in such a manner that the longitudinal wall part 50 is cut and raised in the form of inverted truncated chevron shape (bilaterally symmetrical relative to the longitudinal wall part 50 from an anterior view) and tip ends 53b, 53b of the raised piece parts 53a, 53a perpendicular to the longitudinal wall part 50 are bent at 90 degrees so as to face corner parts 51a, 51a of the first and the second lateral wall parts 51, 52, respectively (refer to Fig.3).

Both upper ends of the U-shaped seal surface part 60 are formed so as to project in opposite directions each other toward the corner part 12b and such projecting regions are formed as projecting parts 63, 63 as shown in Fig.2. The projecting parts 63, 63 are formed on a part of the seal surface part 60 corresponding to the corner part 12b along and toward the shape of the corner part 12b. A part of the gasket 4 corresponding to the corner part 12b indicates both corner parts of an upper side part side 4a of the gasket 4 and also indicates a part elastically contacting the corner part 12b when the gasket 4 is fitted into the cutout recess part 12 for sealing. Lower surfaces 63a of the projecting parts 63, 63 (refer to the enlarged view in Fig.2) are chamfered to the inclining plane surface like the corner part 12b and are shaped along a chamfered surface of the corner parts 12b, 12b. The projecting parts 63, 63 project in the surface area direction of the wall part 11A and have compression allowance portion formed so as to expand opposite to the seal surface part 60. Namely, the upper sides of the projecting parts 63, 63 are formed so as to slightly expand upward from the tip end to the base end side and are assembled in such a manner that they expand further than the upper end surface 11aa of the wall part 11A before the first member 1 and the second member 2 are integrated by fastening. So, there exists gap X (refer to the enlarged view in Fig.2) between the upper end surface 11aa of the wall part 11A and the annular gasket 3 before the first member 1 and the second member 2 are integrated by fastening. The gap X becomes compression allowance portion, so that the projecting parts 63, 63 are easily compressed and tip parts of them are easily deformed in an elastic manner along the corner parts 12b, 12b. Therefore, even if there is dimensional tolerance between the projecting parts 63, 63 and the corner parts 12b. 12b, the corner parts 12b, 12b can be preferably sealed and the seal performance in a so-called three-surface abutting part, which has been thought to be difficult to be sealed, can be improved.

Circumferential edge of the exterior rubber part 6 covering the longitudinal wall part 50 of the core body 5 is elongated to form a cover part 64 extending in the surface area direction of the wall part 11A. Namely, the exterior rubber part 6 has the cover part 64 formed by extending a side part of the seal surface part 60 so as to cover a region corresponding to the cutout recess part 12 from the outside of the wall part 11A of the first member 1 (box-shaped member) when the gasket 4 is fitted into the cutout recess part 12. The cover part 64 is also formed so as to project from the circumferential edge of the projecting parts 63, 63. In addition, an inner flange part 65 is formed in an inner part of the seal surface part 60 toward the first member 1 so as to expand in the surface area direction of the wall part 11A. A part of the cover part 64 corresponding to the corner part 12b, both upper corner parts from an anterior view in this embodiment, has expanding parts 64a, 64a which expand further than other parts. The expanding parts 64a, 64a are formed at a part of the cover part 64 which corresponds to the corner part 12b so as to expand in the surface area direction of the wall part 11A formed with the cutout recess part 12. The part corresponding to the corner part 12b indicates a part of the cover part 64 corresponding to a part (namely, projecting part 63) which elastically contacts the corner part 12b under such conditions that the gasket 4 is fitted into the cutout recess part 12 for sealing. In other words, it can be said that the part is a region of the cover part 64 corresponding to the position where both corner parts of the upper side part 4a of the gasket 4 are formed. The shape of the expanding parts 64a, 64a is not limited to an angular shape which laterally expands and has a triangular projecting top as shown in the figure; however, the projecting part may be rounded. The cover part 64 is formed in such a manner that an outer edge keeps constant space (refer to the space Y in the enlarged view in Fig.2) along the shape of the cutout surface 12a of the cutout recess part 12 as shown in Fig.1 and Fig.2.
The outer surface of the core body 5 is covered with the exterior rubber part 6 in the figure; however, the inner surface may also be covered. The present invention is not limited to an embodiment wherein the entire core body 5 is covered with the exterior rubber part 6. The exterior rubber part 6 may cover only the first and the second lateral wall parts 51, 52 of the core body 5 or may be filled in space surrounded with the longitudinal wall part 50 and the first and the second lateral wall parts 51, 52 of the core body 5 to form a block body. In this specification the term "longitudinal" indicates a direction along depth of the first member 1 and "lateral" indicates the perpendicular direction to the wall part 11A of the first member 1.

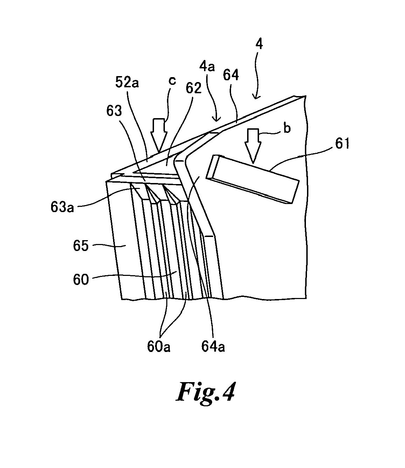

Next, usage of the above-mentioned gasket 4 is explained. The gasket 4 is fitted into the cutout recess part 12 of the first member 1 along the arrow "a" in Fig. 1. The projection part 61 and the exposing part 52a of the second lateral wall part 52 are pressed down with fingers or a simple tool along the arrow "a" as shown with outlined arrows "b", "c" in Fig.4, thereby fitting the gasket 4. The bead part 60a is provided for the seal surface part 60 and is compressed and elastically deformed when the gasket 4 is fitted, so that strong force is required for pressing down. When the gasket 4 is pressed down as shown with the outlined arrows "b", "c", the rubber-coated layer 62 which is a seal surface part with the second member 2 (refer to Fig.5) is not damaged by fingers or the like. The raised piece part 53a which is a part of the core body 5 and the tongue piece part 53 are embedded in the projection part 61, so that the projection part 61 is strengthened by a part of the core body 5 and strong force can be operated for pressing down. When the gasket 4 is fitted into the cutout recess part 12, the wall part 11A adjacent to the cutout recess part 12 is tightly held between the cover part 64 and the inner flange part 65 from the inside and the outside. The first member 1 is, for example, a cylinder head or an inverter case for an automobile engine, and if it is an inverter case, a penetrating retention hole (not shown) for holding a pipe for supplying a cooling medium for restraining heat generation and an electric wire is formed.

After the gasket 4 is fitted into the cutout recess part 12 as mentioned above, the annular gasket 3 is positioned so as to be placed on the upper side part 4a of the gasket 4 including the upper end surface 11aa of the wall part 11A and the rubber-coated layer 62 as shown in Fig.5. The annular gasket 3 may be a molded body made of only a rubber material or a molded body of rubber compound including inorganic or organic fiber, shape is not limited to be a flat belt, and it may have a bead part along the circumferential direction. The second member 2 to be sealed is placed on the first member 1 via the annular gasket 3. Such conditions produce the three-surface abutting part of the gasket 4, the corner part 12b and the annular gasket 3 and gap is sometimes produced because of dimension tolerance. However, when the first member 1 and the second member 2 are integrated by fastening with a bolt (not shown), the bead part 60a is further compressed and the annular gasket 3 is compressed in the thickness direction. Thus, a boundary surface between the seal surface part 60 and the cutout surface 12a of the cutout recess part 12 on the gasket 4 and a boundary surface between the second member 2 and the upper side part 4a of the gasket 4 including the upper end surface 11a of the circumferential wall parts 11 and the rubber-coated layer 62 are sealed via the annular gasket 3. As shown in Fig.7, the projecting part 63 is compressed within the gap X (refer to the enlarged view in Fig.2) between the chamfered corner part 12b of the cutout recess part 12 and the second member 2 and is elastically deformed along the flat inclining surface of the corner part 12b. As a result, tip side of the projecting part 63 fills the gap of the three-surface abutting part, so that the gap can be surely sealed without using an auxiliary seal agent such as a liquid gasket, although it is considered to be difficult to be sealed. If the corner part 12b is not chamfered, the gap of the corner part 12b cannot be filled because of dimension difference between the cutout recess part 12 and the gasket 4, and the seal surface part 60 corresponding to the three-surface abutting part may be broken in case of fastening, and causing a fear of losing seal performance.

A side part of a boundary surface outside of the first member 1 is covered with the cover part 64 extended around the exterior rubber part 6 covering the longitudinal wall part 50 of the core body 5 and cleaning water is prevented from entering the boundary surface even when high-pressure cleaning water is provided. A part of the cover part 64 adjacent to the three-surface abutting part (the corner part 12b) is formed so as to expand further than other parts and distance Y (refer to the enlarged view in Fig.2) can be secured between an outer edge of the cover part 64 to the boundary of the seal surface part 60 and the cutout surface 12a, even if the corner part 12b is chamfered, so that deterioration of shielding function of the cover part 64 is inhibited around the corner part 12b. Therefore, the cover part 64 in this embodiment of the present invention can preferably shut out intrusion of high-pressure cleaning water into the three-surface abutting part. In addition, the tongue piece part 53 as a part of the core body 5 extends adjacent to the three-surface abutting part (the corner part 12b) while embedded in the projection part 61 of the exterior rubber part 6, so that the cover part 64 of the three-surface abutting part is not blown off by high-pressure cleaning water, thereby preferably keeping seal performance of the three-surface abutting part.

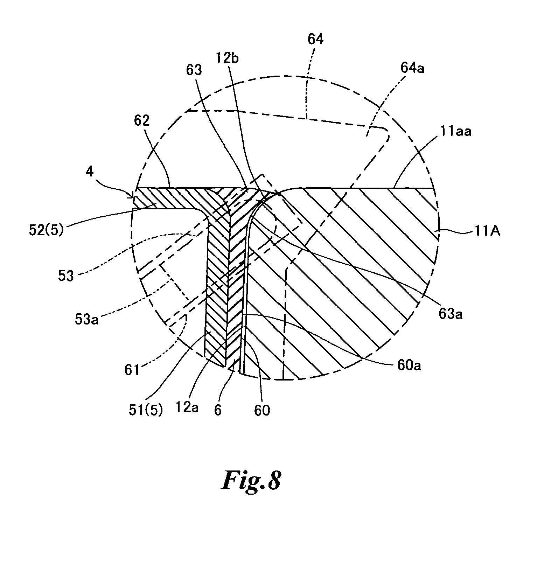

Fig.8 shows another embodiment of the present invention in which chamfered shape of the corner part 12b is different from that in the above-mentioned embodiment. Namely, the corner part 12b is chamfered to be an inclining plane surface in the above-mentioned embodiment; however, it is chamfered in the shape of convex curve (rounding process) in the embodiment in Fig.8. Therefore, a lower surface of the projecting part 63 is formed in the shape of concave curve corresponding to the shape of the corner part 12b in this embodiment. The gasket 4 in this embodiment is also fitted into the cutout recess part 12 of the first member 1 as shown in Fig.1 and the second member 2 is integrated by fastening with the first member 1 via the annular gasket 3. The projecting part 63 is compressed together with the annular gasket 3 between the chamfered corner part 12b of the cutout recess part 12 and the second member 2 and is elastically deformed so as to fill space caused by chamfering the corner part 12b. As a result, despite of the three-surface abutting part, it can be surely sealed without using an auxiliary seal agent such as a liquid gasket similar to the above-mentioned embodiment.
The same reference numbers are allotted to the members which are structurally common to the above-mentioned embodiment and their explanation is omitted here.

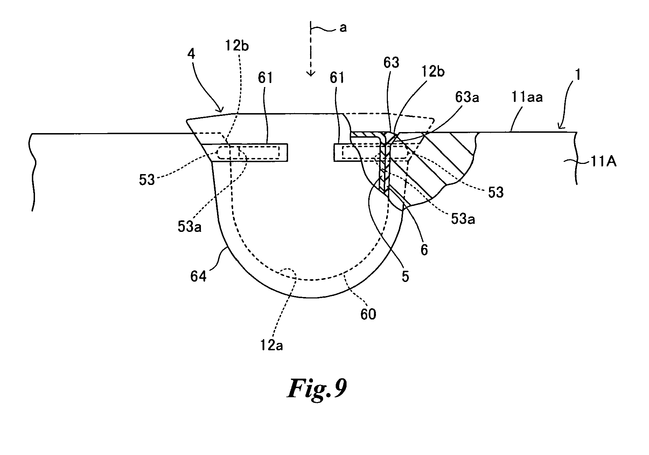

Fig.9 shows another embodiment of the present invention in which formation of the projection parts 61, 61 is different from that in the above-mentioned embodiment. Namely, the projection parts 61, 61 are not the inverted truncated chevron shape as mentioned in the above embodiment, are formed perpendicular to the pressing direction (the arrow "a" in Fig. 1 and Fig.9) and are bilaterally symmetric and serially lateral close to the three-surface abutting part. The tongue piece parts 53, 53 and the raised piece parts 53a, 53a are embedded in the projection parts 61, 61 as mentioned above; however, plate surfaces of the raised piece parts 53a, 53a are formed in parallel with the pressing direction and the tongue piece parts 53, 53 are formed in the direction perpendicular to the pressing direction "a". In this case, the direction of the tongue piece parts 53, 53 is misaligned to the three-surface abutting part; however, basic function is the same as that mentioned above. In this embodiment, the plate surfaces of the raised piece parts 53a, 53a are parallel with the pressing direction "a", so that resistance force to pressing force becomes larger than that in the above-mentioned embodiment because of rib effect. Therefore, such operations that the gasket 4 is pressed down with fingers by operating on the projection parts 61, 61 to be fitted into the cutout recess part 12 as shown in the arrow "b" in Fig.4 are effectively done. The same reference numbers are allotted to the members which are structurally common to the above-mentioned embodiments and their explanation is omitted here.

Configuration, shape, and the like of the gasket 4 are not limited to those in the above-mentioned embodiments. For example, the corner part 12b is chamfered in the shape of an inclining plane surface or in the shape of convex curve in the above-mentioned embodiments; however, it may be formed in the shape of a concave curve or in other shape. The lower surface of the projecting part 63 is formed so as to fit each chamfered surface. The tongue piece part 53 is formed by cutting and raising a part of the core body 5 in the above-mentioned embodiments; however it may be formed on the longitudinal wall part 50 of the core body 5 by welding a tongue piece part which is separately prepared or may be formed by drawing the longitudinal wall part 50. In addition, a cylinder head and an inverter case for an automobile are exemplified as an object to which the gasket 4 of the present invention is applied; however, objects in other field may be used as long as the gasket is fitted into a recess part formed by cutting a wall part of a box-shaped member and seals the cutout surface. The tongue piece part 53 may be omitted as long as there is no fear of damaging the rubber-coated layer 62. If the three-surface abutting part as mentioned above may be adequately sealed by the existence of the projecting part 63, the cover part 64 may be optionally omitted. The exterior rubber part 6 of the gasket 4 of the present invention and the annular gasket 3 as shown in Fig.5 may be integrally molded. The core body 5 functioning as a reinforcing member of the gasket 4 is not limited to the core body 5 made of an iron steel plate, a stainless steel plate, or the like as mentioned above, and it may be made from resin material, rubber material, or the like as long as it has higher rigidity than the exterior rubber part 6. Shape of the core body 5 may be modified such that the longitudinal section is in the form of the letter I (not shown). Shape of the core body 5 is not limited to shape fitting the cutout recess part 12, and it may be desirably modified as long as shape of the exterior rubber 6 is maintained. Furthermore, the cutout recess part 12 is not limited to be formed by cutting out after the box-shaped member is molded as long as it is cut out so as to communicate with the opening of the box-shaped member and to be in the form of concave shape, and for example it may form a cutout recess part as shown in Fig.1 at the time of molding when the box-shaped member is made from resin.

## Claims

1. A gasket adapted to be inserted into a cutout recess part (12) formed on a wall part (11A) of a box-shaped member (1) with an opening part (10) on at least one surface in which said cutout recess part (12) communicates with said opening part (10):
wherein said cutout recess part (12) has a chamfered surface at a corner part (12b) on said opening part side;
wherein said gasket (4) comprises an exterior rubber part (6) having a seal surface part (60) elastically contacting said cutout recess part (12) and a core body (5) having higher rigidity than that of said exterior rubber part (6) and covered with said exterior rubber part (6); and
wherein said seal surface part (60) has at a region corresponding to said corner part (12b) on said opening part side of said cutout recess part (12) a projecting part (63) formed along said corner part (12b) on said opening part side and projecting toward said corner part (12b) on said opening part side of said cutout recess part (12).

2. The gasket as set forth in claim 1, wherein said projecting part (63) further has a compression allowance portion projecting opposite to said seal surface part (60).

3. The gasket as set forth in claim 1 or 2,
wherein said exterior rubber part (6) further has a cover part (64) extending from a side part of said seal surface part (60) so as to cover a region of said wall part (11A) corresponding to said cutout recess part (12) from the outside of said box-shaped member (1) when said gasket (4) is fitted into said cutout recess part (12) of said box-shaped member (1); and
wherein said cover part (64) has an expanding part (64a) at said region corresponding to said corner part (12b) on said opening part side.

4. The gasket as set forth in claim 3,
wherein said core body (5) has a tongue piece part (53) formed to reach a position corresponding to said projecting part (63); and
wherein said exterior rubber part (6) has a projection part (61) formed to cover said tongue piece part (53).

5. The gasket as set forth in claim 4,
wherein said core body (5) is made of metal; and
wherein said tongue piece part (53) is made by cutting and raising a part of said core body (5) and bending the cut end side.

6. A seal structure including a gasket, in which said gasket (4) is adapted to be inserted into a cutout recess part (12) formed on a wall part (11A) of a box-shaped member (1) with an opening part (10) on at least one surface in which said cutout recess part (12) communicates with said opening part (10):
wherein said cutout recess part (12) has a chamfered surface at a corner part (12b) on said opening part side;
wherein said gasket (4) comprises an exterior rubber part (6) having a seal surface part (60) elastically contacting said cutout recess part (12) and a core body (5) having higher rigidity than that of said exterior rubber part (6) and covered with said exterior rubber part (6); and
wherein said seal surface part (60) has at a region corresponding to said corner part (12b) on said opening part side of said cutout recess part (12) a projecting part (63) formed along said corner part (12b) on said opening part side and projecting toward said corner part (12b) on said opening part side of said cutout recess part (12).
